# FASCICULE DE BREVET EUROPEEN

(11) **EP 1 633 813 B1**
(45) Date de publication et mention de la délivrance du brevet: **20.02.2008**
(21) Numéro de dépôt: 04767205.0
(22) Date de dépôt: 28.05.2004
(51) Int. Cl.: C08K 5/548, C08K 3/36, C08J 3/20

(54) **AGENT DE COUPLAGE POUR COMPOSITION ELASTOMERIQUE COMPRENANT UNE CHARGE RENFORCANTE**
KUPPLUNGSMITTEL FÜR EINE EINEN VERSTÄRKENDEN FÜLLSTOFF ENTHALTENDE ELASTOMERE ZUSAMMENSETZUNG
COUPLING AGENT FOR AN ELASTOMERIC COMPOSITION COMPRISING A REINFORCING FILLER

(30) Priorité: 16.06.2003 FR 0307193
(43) Date de publication de la demande: 15.03.2006
(73) Titulaire: ARKEMA FRANCE, 92700 Colombes (FR)
(72) Inventeur: AUBERT, Thierry, F-64000 Pau (FR)
(74) Mandataire: Treuil, Claude
(86) Numéro de dépôt international: PCT/FR2004/001328
(87) Numéro de publication internationale: WO 2005/007738

(56) Documents cités:
- EP-A- 0 501 227
- EP-A- 0 700 958
- WO-A-01/96463
- WO-A-97/42256
- US-A- 5 534 574

## Description

La présente invention concerne le domaine des compositions de caoutchouc destinées notamment à la fabrication des pneumatiques, et plus spécialement à la fabrication des bandes de roulement pour véhicules à moteur. Elle a plus particulièrement pour objet une composition élastomérique vulcanisable au soufre comprenant une charge renforçante et un agent de couplage spécifique.

Bien des recherches ont été effectuées pour améliorer les propriétés requises pour les enveloppes des pneumatiques. En liaison avec l'objectif permanent d'économies de carburant pour les véhicules à moteur, on s'efforce ainsi d'améliorer la résistance au roulement des dites enveloppes, tout en maintenant une excellente adhérence tant sur sol sec que sur sol humide, ainsi qu'une résistance à l'usure convenable.

On connaît déjà des compositions élastomériques destinées à former ces bandes de roulement. Elles comprennent en général outre un élastomère diénique une charge renforçante. Cette charge renforçante est généralement du noir de carbone ou de la silice.

On sait que pour obtenir les propriétés de renforcement optimales conférées par la charge, il convient que celle-ci soit présente dans la matrice élastomère sous une forme finale qui soit à la fois la plus finement divisée possible, et répartie de la façon la plus homogène possible. Or, de telles conditions ne peuvent être réalisées que dans la mesure où la charge présente une très bonne aptitude d'une part à s'incorporer dans la matrice lors du mélange avec l'élastomère, et d'autre part à se disperser de façon homogène dans ladite matrice.

De manière connue, le noir de carbone présente une telle aptitude, mais ce n'est pas le cas en général pour les particules de silice. En effet, pour des raisons d'affinité réciproque, les particules de silice ont une fâcheuse tendance à s'agglomérer entre elles dans la matrice élastomère. Cela est néfaste pour les propriétés de renforcement du produit final obtenu après vulcanisation. Cela est également gênant dans la mesure où, augmentant la viscosité de l'élastomère, la silice rend, après son incorporation, la composition élastomérique vulcanisable difficile à travailler ou à malaxer, notamment lorsqu'il s'agit d'incorporer par mélange les additifs non soufrés et le système de vulcanisation, ou lorsqu'on introduit le mélange comprenant tous les ingrédients dans un moule de vulcanisation.

Or l'utilisation de silice dans la fabrication de bandes de roulement de pneumatiques est particulièrement intéressante, dans la mesure où elle est susceptible d'abaisser la résistance au roulement, et donc d'obtenir une économie substantielle de carburant.

L'art antérieur décrit déjà des produits favorisant la dispersion d'une charge, notamment de la silice, dans une composition élastomérique. De tels produits sont souvent appelés agents de couplage.

La demande de brevet européen EP 0501227 mentionne ainsi, pour une composition vulcanisable au soufre comprenant un copolymère d'un diène conjugué renforcé par une silice particulière, l'utilisation de 12,8 parties en poids (pour 100 parties de caoutchouc) d'un agent dit renforçant, comprenant 6,4 parties en poids d'un organosilane polysulfuré.

La demande internationale WO 97/42256 mentionne également pour des compositions élastomériques comprenant de la silice, l'utilisation comme agent de couplage d'un organosilane polysulfuré spécifique : le tétrasulfure de bis-triethoxysilylpropyle, connu également sous la dénomination commerciale de Si-69® de Degussa AG. Cet agent de couplage, qui est largement utilisé au plan industriel, présente cependant l'inconvénient d'être excessivement coûteux.

C'est la raison pour laquelle ce document enseigne, pour l'essentiel, des compositions élastomériques comprenant du noir de carbone traité en tant que charge renforçante, pour lesquelles il recommande l'utilisation, comme agent modifiant de pré-vulcanisation, d'un composé organique non silane polysulfuré, par exemple l'utilisation d'un polysulfure de tertiobutyl phenol.

La demande internationale WO 02/083719 s'attache encore au problème du remplacement du tétrasulfure de bis-triéthoxysilylpropyle comme agent de couplage d'une charge blanche (telle la silice) dans une composition de caoutchoucs diéniques. Elle propose dans ce but des monoorganoxysilanes polysulfurés. Toutefois, ces derniers composés conduisent encore à des coûts excessifs, en raison de la chimie utilisée.

On cherche donc -et c'est le but de la présente invention- de nouveaux agents de couplage ayant un coût réduit par rapport au Si-69, et permettant d'assurer des propriétés optimales aux bandes de roulement de pneumatiques, tout en maintenant des propriétés rhéologiques acceptables pour la mise en oeuvre et le traitement des compositions vulcanisables, notamment en ce qui concerne leur viscosité.

Dans le présent texte, les % indiqués correspondent, en l'absence d'indication contraire, à des teneurs exprimées en poids.

La présente invention a pour objet une composition élastomérique vulcanisable au soufre comprenant au moins un élastomère diénique et au moins une charge renforçante, caractérisée en ce qu'elle est susceptible d'être obtenue par un procédé comprenant le mélange dudit élastomère et de ladite charge avec une quantité efficace d'un agent de couplage consistant en une combinaison de :
- 10 à 90 %, de préférence de 50 à 70 % d'un produit (I) consistant en un mélange de polysulfures de poly(alkyl phénol) de formule : 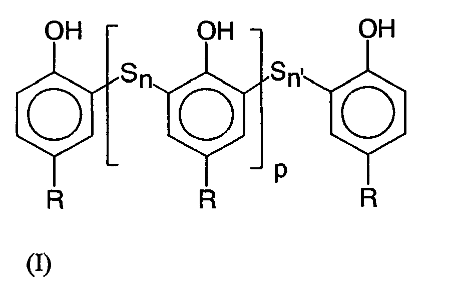 dans laquelle :
   - R est un radical alkyle comprenant de 1 à 20 atomes de carbone, de préférence de 4 à 10 ;
   - n et n' sont deux entiers, identiques ou différents, compris entre 1 et 8, de préférence entre 1 et 4,
   - p est un entier compris entre 0 et 50, de préférence entre 0 et 20 ; et
   - de 10 à 90%, de préférence de 30 à 50 % d'un produit (II) constitué par le tétrasulfure de bis-triethoxysilylpropyle.

Il a en effet été trouvé, de manière surprenante, que l'introduction d'une quantité efficace du produit de formule (I) permettait, tout en maintenant la viscosité de la composition vulcanisable, de diminuer la quantité requise de tétrasulfure de bis-triethoxysilylpropyle (ou Si-69) et d' améliorer les propriétés des bandes de roulement fabriquées à partir de la dite composition, notamment vis-à-vis de la résistance au roulement et de l'adhérence sur sol mouillé. Ainsi, il n'est pas nécessaire de faire appel à des quantités importantes de composés silylés, comme enseigné par l'art antérieur, et l'on dispose d'une alternative technico-économique pratique à l'utilisation exclusive du Si-69.

La composition selon l'invention peut comprendre un ou plusieurs élastomères diéniques. Par élastomères diéniques, on entend plus précisément :
(1) les homopolymères obtenus par polymérisation d'un monomère diène conjugué ayant de 4 à 22 atomes de carbone, comme par exemple : le butadiène-1,3, le méthyl-2 butadiène-1,3, le diméthyl-2,3 butadiène-1,3, le diéthyl-2,3 butadiène-1,3, le méthyl-2 éthyl-3 butadiène-1,3, le chloro-2 butadiène-1,3, le méthyl-2 isopropyl-3 butadiène-1,3, le phényl-1 butadiène-1,3, le pentadiène-1,3, l'hexadiène-2,4 ;
(2) les copolymères obtenus par copolymérisation d'au moins deux des diènes conjugués précités entre eux ou par copolymérisation d'un ou plusieurs des diènes conjugués précités avec un ou plusieurs monomères insaturés éthyléniquement choisis parmi :
   - les monomères vinyles aromatiques ayant de 8 à 20 atomes de carbone, comme par exemple : le styrène, l'ortho-, méta- ou paraméthylstyrène, le mélange commercial « vinyl-toluène », le paratertiobutylstyrène, les méthoxystyrènes, les chlorostyrènes, le vinylmésitylène, le divinylbenzène, le vinylnaphtalène ;
   - les monomères nitriles vinyliques ayant de 3 à 12 atomes de carbone, comme par exemple l'acrylonitrile, le méthacrylonitrile ;
   - les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;
      les copolymères peuvent contenir entre 99 % et 20 % en poids d'unités diéniques et entre 1 % et 80 % en poids d'unités vinyles aromatiques, nitriles vinyliques et/ou esters acryliques ;
(3) les copolymères ternaires obtenus par copolymérisation d'éthylène, d'une a-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène (élastomère EPDM);
(4) le caoutchouc naturel ;
(5) les copolymères obtenus par copolymérisation d'isobutène et d'isoprène (caoutchouc butyle), ainsi que les versions halogénées, en particulier chlorées ou bromées, de ces copolymères ;
(6) un mélange de plusieurs des élastomères précités (1) à (5) entre eux.

A titre préférentiel, on utilise un ou plusieurs élastomères choisis parmi le polybutadiène ou le poly(styrène-butadiène) qui conviennent avantageusement à la fabrication des bandes de roulement de pneumatiques.

On peut utiliser dans la composition selon l'invention, une ou plusieurs charges renforçantes, telles qu' une charge blanche et/ou du noir de carbone.

Selon une variante préférée de l'invention, on utilise une charge renforçante blanche.

On entend par l'expression « charge blanche renforçante », une charge blanche capable de renforcer à elle seule, sans autre moyen que celui d'un agent de couplage, une composition d'élastomère(s) de type caoutchouc, naturel(s) ou synthétique(s).

L'état physique sous lequel se présente la charge blanche renforçante est indifférent, c'est-à-dire que ladite charge peut se présenter sous forme de poudre, de microperles, de granulés ou de billes.

La charge blanche renforçante consiste généralement en de la silice, de l'alumine ou en un mélange de ces deux espèces.

De manière plus préférentielle, la charge blanche renforçante consiste dans la silice, prise seule ou en mélange avec de l'alumine.

A titre de silice susceptible d'être mise en oeuvre dans la composition selon l'invention conviennent toutes les silices précipitées ou pyrogénées connues de l'homme de l'art présentant une surface spécifique BET = à 450 m²/g. On préfère les silices de précipitation, celles-ci pouvant être classiques ou hautement dispersibles. Par silice hautement dispersible, on entend toute silice ayant une aptitude très importante à la désagglomération et à la dispersion dans une matrice polymérique, observable par microscopie électronique ou optique, sur coupes fines.

Comme exemples non limitatifs de silices hautement dispersibles, on peut citer celles ayant une surface spécifique CTAB égale ou inférieure à 450 m²/g, allant de préférence de 30 à 400 m²/g, et particulièrement celles décrites dans le brevet US-A-5 403 570 et les demandes de brevets WO-A-95/09127 et WO-A-95/09128.

Comme exemples non limitatifs de telles silices hautement dispersibles, on peut citer la silice Perkasil KS 430 de la société AKZO, la silice BV3380 de la société DEGUSSA, les silices Zeosil 1165 MP et 1115 MP de la société RHODIA, la silice Hi-Sil 2000 de la société PPG, les silices Zeopol 8741 ou 8745 de la société HUBER.

A titre plus préférentiel, conviennent bien les silices de précipitation ayant :
- une surface spécifique CTAB allant de 100 à 240 m²/g, de préférence de 100 à 180 m²/g,
- une surface spécifique BET allant de 100 à 250 m²/g, de préférence de 100 à 190 m²/g,
- une prise d'huile DOP inférieure à 300 ml/100 g, de préférence allant de 200 à 295 ml/100 g,
- un rapport surface spécifique BET/surface spécifique CTAB allant de 1,0 à 1,6.

Les polysulfures de poly(alkyl phénol) de formule (I) sont connus depuis longtemps, et sont notamment commercialisés par la Société ATOFINA sous la dénomination VULTAC®. Ils peuvent être préparés par réaction du monochlorure ou du dichlorure de soufre sur un alkyl phénol, à une température comprise entre 100 et 200 °C, selon la réaction suivante :

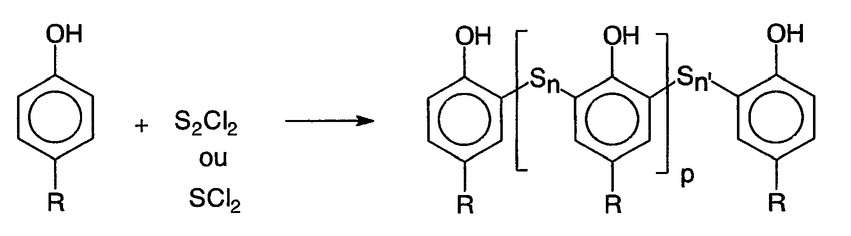

On peut citer comme référence de fabrication de ces produits le brevet US 2 422 156 ou US 3 968 062.

Selon une variante préférée, on utilise un mélange de composés de formule (I) dans laquelle R est un radical alkyle comprenant au moins un carbone tertiaire par lequel R est relié au noyau aromatique.

Selon une variante particulièrement avantageuse, R est un radical tertio-butyle ou tertio-pentyle.

On utilise encore plus préférentiellement comme mélange de composés de formule (I) un mélange dans lequel la valeur moyenne de n et de n' est d'environ 2, et la valeur moyenne de p est d'environ 5. Ces valeurs moyennes sont calculées par l'homme du métier à partir de données RMN du proton et par dosage pondéral du soufre.

On préfère mettre en oeuvre comme agent de couplage dans la composition selon l'invention une combinaison du produit de formule (I) et et du produit (II) dans laquelle le rapport du poids (I) / (II) est compris entre 1 et 3, et, de préférence, voisin de 2.

La présente invention a également pour objet l'agent de couplage tel que défini précédemment.

Le produit (II) dénommé tétrasulfure de bis-triethoxysilylpropyle est un mélange de composés de formule :

(EtO)₃Si-(CH₂)₃-S_{q}-(CH₂)₃-Si(OEt)₃

dans laquelle la valeur moyenne de q est d' environ 4.
Ce produit est disponible commercialement, par exemple auprès de Degussa AG (Allemagne) sous la marque Si-69®.

Selon une variante préférée, le produit (II) est mis en oeuvre dans la composition selon l'invention sous la forme d'un mélange 50% / 50% en poids avec du noir de carbone.

Lorsque, conformément à une variante préférée de l'invention, on utilise comme charge renforçante, une charge blanche, spécialement la silice, la composition selon l'invention est obtenue en mélangeant à 100 parties en poids d'élastomère(s) diénique(s) :
- de 10 à 200 parties en poids de charge blanche renforçante, de préférence entre 20 et 150, et
- de 0,5 à 10 parties en poids d'agent de couplage tel que défini précédemment, de préférence de 2 à 8.

Selon une variante préférentielle, on mélange à 100 parties en poids d'élastomère(s) diénique(s) de 50 à 100 parties en poids de silice, et de 5 à 7 parties en poids de l'agent de couplage.

Selon une variante préférée, le procédé de préparation de la composition vulcanisable au soufre selon l'invention comprend en outre l'incorporation des additifs non soufrés usuellement utilisés dans les compositions élastomériques destinées à la fabrication des bandes de roulement, à l'exception du système de vulcanisation. Il peut s'agir notamment de plastifiants, pigments, antioxydants, des activateurs de vulcanisation, des huiles d'extension naphténiques ou aromatiques. Selon cette variante, l'élastomère diénique, la charge renforçante, les produits (I) et (II), et les additifs non soufrés sont soumis à un travail mécanique dans tout dispositif approprié comme par exemple dans un mélangeur ou une boudineuse pendant la durée appropriée, de telle sorte qu'il comprenne au moins une étape thermique dont la température est comprise entre 130°C et 170°C, de préférence entre 130 et 150°C.

La durée appropriée du travail thermo-mécanique varie en fonction des conditions opératoires retenues par l'homme du métier, et en particulier de la température choisie et comprise dans l'intervalle indiqué ci-dessus, de la nature et du volume des constituants soumis au travail mécanique. L'essentiel est que le travail mécanique entraîne une excellente dispersion de la charge, se traduisant particulièrement dans le cas où l'on utilise de la silice comme charge, par une diminution de la taille des particules correspondantes. Il est également important que l'énergie requise soit atteinte par le couple temps-température et ce avec un nombre variable d'étapes utilisées pour atteindre ce niveau d'énergie, afin que l'on obtienne la maximisation du rapport : module d'allongement à 300% / module d'allongement à 100%. Ce rapport est l'un des paramètres couramment utilisé par l'homme du métier pour contrôler l'efficacité du renforcement de l'élastomère par la charge.

Ainsi, en fonction des dispositifs thermo-mécaniques utilisés pour réaliser ce travail thermo-mécanique, la durée du dit travail peut varier de 1 minute à 20 minutes, et pourra être déterminée par l'homme du métier sur la base de ses connaissances générales, et du contrôle des propriétés de la composition utilisée sous forme de bande de roulement de pneumatiques. Ainsi le travail thermo-mécanique peut ne comprendre qu'une seule étape thermo-mécanique de durée, de température et apportant l'énergie d'intensité ou comprendre plusieurs étapes thermo-mécaniques pouvant être séparées par au moins une étape de refroidissement.

A la composition obtenue selon la variante qui vient d'être décrite, on ajoute en outre avantageusement un système de vulcanisation comprenant notamment le soufre et les accélérateurs de vulcanisation, par travail mécanique de finition, par exemple en utilisant un mélangeur externe à une température inférieure à 100°C. On utilise comme système de vulcanisation un système usuel, comprenant par exemple outre le soufre des accélérateurs de vulcanisation comme une sulfénamide et/ou la diphénylguanidine.

La présente invention a également pour objet un article moulé susceptible d'être obtenu par mise en forme de la composition obtenue après incorporation du système de vulcanisation, puis chauffage.

Après mise en forme de la composition dans un moule de forme désirée, par exemple par coulage, le chauffage conduit à la vulcanisation (ou cuisson) de la composition. De manière connue, ce chauffage s'effectue à une température allant généralement de 130 à 200 °C, éventuellement sous pression, et durant un temps suffisant qui peut varier par exemple entre 5 et 90 minutes, en fonction notamment de la température de cuisson, du système de vulcanisation adopté, et de la cinétique de vulcanisation de la composition considérée.

On préfère comme article moulé selon l'invention des bandes de roulement de pneumatiques, en raison de leurs propriétés avantageuses de résitance à la traction, d'adhérence sur sol mouillé, et de résistance au roulement.

La présente invention est illustrée à titre non limitatif par les exemples suivants.

### Exemple 1 : Composition de poly(styrène-budiène) (ou SBR) et polybutadiène, renforcée par de la silice et comprenant 4 parties en poids de produit (I) et 2 parties en poids de produit (II) :

### A- Préparation de la composition :

On introduit dans un mélangeur interne de 2 litres de type Banbury dans l'ordre : le SBR, le polybutadiène, les trois quarts de la silice, le produit (I) et le produit (II) constituant l'agent de couplage, le reste de la silice, puis les additifs non soufrés.

L'ensemble est mélangé jusqu'à ce que la température atteigne 145°C, soit environ durant 5 minutes. On poursuit le mélange durant 4 minutes à cette même température.

La composition ainsi obtenue est transférée dans un mélangeur externe bicylindrique, dont chaque cylindre a un diamètre de 300 mm et une longueur de 700 mm. On ajoute alors à la composition le système de vulcanisation comprenant le soufre et les 2 accélérateurs de vulcanisation, à une température inférieure à 100°C. On poursuit le mélange durant environ 5 minutes.

La teneur des différents ingrédients utilisés pour préparer la composition est indiquée dans le tableau I ci-après. Cette teneur est exprimée en parties en poids sur la base de 100 parties en poids d'élastomères.

### B- Propriétés rhéologiques :

On mesure la viscosité Mooney sur la composition préparée conformément à A.

La viscosité Mooney est le résultat de la mesure de l'indice consistométrique effectuée selon la Norme Française NF T43-005 éditée par l'Association Française de Normalisation. Cette mesure réalisée sur un caoutchouc non vulcanisé se fait à l'aide d'un appareil appelé "consistomètre à cisaillement".

Le résultat est indiqué dans le tableau II ci-après.

### C- Vulcanisation de la composition :

Une partie de la composition est mise sous forme de plaque, puis vulcanisée à une température de 170 °C durant 20 minutes. La plaque est ensuite découpée en éprouvettes de type haltères (H2).

Une autre partie de la composition est mise sous forme d' éprouvettes de type Goodrich (cylindres 25 x 18 mm) qui sont ensuite vulcanisées à une température de 170 °C durant 25 minutes.

### D- Propriétés de la composition vulcanisée :

On mesure sur les éprouvettes les paramètres suivants : M300/M100, tgd à 0°C et 10 Hz, tgd à 60°C et 10 Hz.

Le rapport Module 300% / Module 100% (ou encore M300/M100), représentatif de l'indice de renforcement de la charge, est calculé à partir d'essais de tractions réalisés conformément à la Norme Française NF T46-002, sur les éprouvettes de type haltères.

Tgd mesurée à une température de 0°C et à une fréquence de 10 Hz permet de caractériser l'adhérence sur sol mouillé : plus la valeur de tgd à cette température est élevée, meilleure sera l'adhérence sur sol mouillé. Tgd mesurée à une température de 60°C et à une fréquence de 10 Hz permet de caractériser la résistance au roulement : plus la valeur de tgd à cette température est faible, plus faible sera la résistance au roulement et plus grande sera l'économie de carburant. Ces 2 paramètres sont mesurés conformément à la norme ISO 4664:1998 concernant les propriétés viscoélastiques en régime dynamique, sur les éprouvettes de type Goodrich.

Les résultats obtenus sont reportés dans le tableau II ci-après.

### Exemple 2 :

On répète l'exemple 1, en modifiant les teneurs en produits (I) et (II) comme indiqué dans le tableau I.

On obtient les propriétés rassemblées dans le tableau II.

### Exemple de référence (comparatif) :

On répète l'exemple 1, en utilisant comme agent de couplage exclusivement le produit (II) à une teneur de 6,4 parties en poids (pour 100 parties en poids d'élastomères). Cette teneur correspond à celle du brevet EP 0501227 en organosilane polysulfuré, et à la teneur usuelle d'introduction du Si-69® dans l'industrie du pneumatique.

Les propriétés mesurées sont également rassemblées dans le tableau II.

Les exemples selon l'invention font apparaître un indice consistométrique (viscosité Mooney) légèrement supérieur à celui de l'exemple de référence, mais qui reste cependant à un niveau tout à fait acceptable pour avoir des compositions élastomériques vulcanisables au soufre qui soient aptes à la mise en oeuvre, notamment en ce qui concerne les opérations de coulage dans un moule préalablement à la mise en forme par vulcanisation.

De même l'indice de renforcement des exemples 1 et 2 est sensiblement du même ordre que celui obtenu pour l'exemple de référence.

En revanche, et de manière surprenante, les valeurs de tgd indiquent que l'adhérence sur sol mouillé et la résistance au roulement pour les exemples selon l'invention sont nettement améliorées par rapport à la référence, alors que ces exemples permettent de plus une diminution du coût de l'agent de couplage, le produit (I) étant en effet nettement moins coûteux que le Si69®.

**Tableau I**

| | | **Exemple 1** | **Exemple 2** | **Référence** |
|---|---|---|---|---|
| Elastomère SBR | (1) | 103,12 (soit 75 de SBR) | 103,12 (soit 75 de SBR) | 103,12 (soit 75 de SBR) |
| Polybutadiène | (2) | 25 | 25 | 25 |
| Silice | (3) | 80 | 80 | 80 |
| Huile aromatique | (4) | 4,38 | 4,38 | 4,38 |
| Oxyde de zinc | (5) | 2,5 | 2,5 | 2,5 |
| Acide stéarique | (6) | 2,5 | 2,5 | 2,5 |
| Antioxydant | (7) | 2 | 2 | 2 |
| AntiUV | (8) | 1,5 | 1,5 | 1,5 |
| Soufre | (9) | 1,4 | 1,4 | 1,4 |
| Sulfénamide | (10) | 1,7 | 1,7 | 1,7 |
| Diphénylguanidine | (11) | 2 | 2 | 2 |
| Produit (I) | (12) | 4 | 3 | 0 |
| Produit (II) | (13) | 2 | 2 | 6,4 |

Les caractéristiques des ingrédients utilisés dans le tableau I ci-dessus sont les suivantes :
(1) copolymère Styrène-Butadiène préparé en solution, disponible commercialement sous la forme d'un élastomère étendu à 27,3 % d'huile, ayant une teneur en styrène de 25 %, une teneur en liaisons vinyliques de 55 %, une teneur en liaisons trans-1,4 de 12%, et une teneur en liaisons cis-1,4 de 8%. Ce produit est vendu sous la dénomination commerciale SBR Buna VSL 5525-1 par la Société Bayer.
(2) polybutadiène ayant un pourcentage de liaison cis-1,4 de 96,5 %
(3) silice hautement dispersible ayant une surface BET et CTAB d'environ 150 à 160 m²/g vendue sous la dénomination commerciale Zéosil 1165 MP par la Société Rhodia
(4) huile aromatique vendue sous la dénomination commerciale Huile Mobilsol K par la Société Mobil
(5) et (6) activateurs de vulcanisation
(7) Antioxydant vendu sous la dénomination commerciale Antiox 6PPD
(8) Antilux 500
(9) soufre élémentaire ayant une taille de particule en dessous de 300 µm
(10) Cyclohexyl-benzothiazyl-sulfénamide, accélérateur de vulcanisation vendu par la société MLPC sous la dénomination commerciale EKALAND CBS
(11) accélérateur de vulcanisation vendu par la société MLPC sous la dénomination commerciale EKALAND DPG
(12) Polysulfure de poly(alkyl phénol) disponible sous la dénomination Vultac® TB7 auprès de la Société ATOFINA : mélange de composés de formule (I) dans laquelle R est un radical tertio-butyle, n et n' sont chacun en moyenne égaux à environ 2 , et p est égal à environ 5 en moyenne.
(13) tétrasulfure de bis-triethoxysilylpropyle disponible sous la dénomination commerciale de Si-69® auprès de Degussa AG

**Tableau II**

| | Composition vulcanisable | Article vulcanisé | | |
|---|---|---|---|---|
| | Indice consistométrique (Mooney) | M300/M100 | tgd à 0°C | tgd à 60°C |
| | Viscosité | Indice de renforcement | Adhérence sur sol mouillé | Résistance au roulement |
| Exemple 1 | 94 | 4,4 | 0,633 | 0,115 |
| Exemple 2 | 91 | 4,6 | 0,593 | 0,125 |
| Référence | 71 | 4,9 | 0,519 | 0,129 |

## Revendications

1. Composition élastomérique vulcanisable au soufre comprenant au moins un élastomère diénique et au moins une charge renforçante, **caractérisée en ce qu'**elle est susceptible d'être obtenue par un procédé comprenant le mélange dudit élastomère et de ladite charge, avec une quantité efficace d'un agent de couplage consistant en une combinaison de :
- 10 à 90 %, de préférence de 50 à 70 % d'un produit (I) consistant en un mélange de polysulfures de poly(alkyl phénol) de formule : 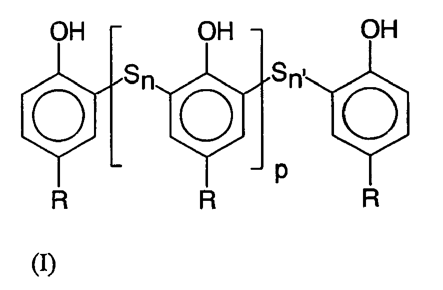
dans laquelle :
- R est un radical alkyle comprenant de 1 à 20 atomes de carbone, de préférence de 4 à 10 ;
- n et n' sont deux entiers, identiques ou différents, compris entre 1 et 8, de préférence entre 1 et 4,
- p est un entier compris entre 0 et 50, de préférence entre 0 et 20 ; et
- de 10 à 90%, de préférence de 30 à 50 % d'un produit (II) constitué par le tétrasulfure de bis-triethoxysilylpropyle.

2. Composition élastomérique selon la revendication 1, **caractérisée en ce que** l'on utilise un ou plusieurs élastomères choisis parmi le polybutadiène ou le poly(styrène-butadiène).

3. Composition élastomérique selon l'une des revendications 1 ou 2, **caractérisée en ce que** l'on utilise une charge renforçante blanche.

4. Composition élastomérique selon la revendication 3, **caractérisée en ce que** la charge blanche est de la silice, prise seule ou en mélange avec de l'alumine.

5. Composition élastomérique selon l'une des revendications 1 à 4, **caractérisée en ce que** on utilise un mélange de composés de formule (I) dans laquelle R est un radical alkyle comprenant au moins un carbone tertiaire par lequel R est relié au noyau aromatique.

6. Composition élastomérique selon la revendication 5, **caractérisée en ce que** R est un radical tertio-butyle ou tertio-pentyle.

7. Composition élastomérique selon l'une des revendications 1 à 6, **caractérisée en ce que** on utilise comme mélange de composés de formule (I) un mélange dans lequel la valeur moyenne de n et de n' est d'environ 2, et la valeur moyenne de p est d'environ 5.

8. Composition élastomérique selon l'une des revendications 1 à 7, **caractérisée en ce que** le rapport du poids (I) / (II) est compris entre 1 et 3, et, de préférence, voisin de 2.

9. Composition élastomérique selon l'une des revendications 3 à 8, **caractérisée en ce que** l'on mélange à 100 parties en poids d'élastomère(s) diénique(s):
- de 10 à 200 parties en poids de charge blanche renforçante, de préférence entre 20 et 150, et
- de 0,5 à 10 parties en poids d'agent de couplage tel que défini précédemment, de préférence de 2 à 8.

10. Composition élastomérique selon la revendication 9, **caractérisée en ce que** l'on mélange à 100 parties en poids d'élastomère(s) diénique(s), de 50 à 100 parties en poids de silice, et de 5 à 7 parties en poids de l'agent de couplage.

11. Composition élastomérique selon l'une des revendications 1 à 10, **caractérisée en ce que** l'on incorpore en outre des additifs non soufrés usuels.

12. Composition élastomérique selon la revendication 11, **caractérisée en ce que** l'élastomère diénique, la charge renforçante, les produits (I) et (II), et les additifs non soufrés sont soumis à un travail mécanique comprenant au moins une étape thermique dont la température est comprise entre 130°C et 170°C, de préférence entre 130 et 150°C.

13. Composition élastomérique selon l'une des revendications 11 ou 12, **caractérisée en ce que** on ajoute en outre un système de vulcanisation comprenant notamment le soufre et les accélérateurs de vulcanisation, par travail mécanique de finition.

14. Agent de couplage tel que défini dans l'une des revendications 1 et 5 à 8.

15. Article moulé susceptible d'être obtenu par mise en forme de la composition telle que définie dans la revendication 13, puis par chauffage.

16. Article moulé selon la revendication 15, **caractérisé en ce qu'**il s'agit de bandes de roulement de pneumatiques.

## Claims

1. A sulfur-vulcanizable elastomeric composition comprising at least one diene elastomer and at least one reinforcing filler, **characterized in that** it can be obtained by a process comprising the mixing of said elastomer and said filler with an effective amount of a coupling agent consisting of a combination of:
- 10 to 90%, preferably 50 to 70%, of a product (I) consisting of a blend of poly(alkylphenol) polysulfides of formula: 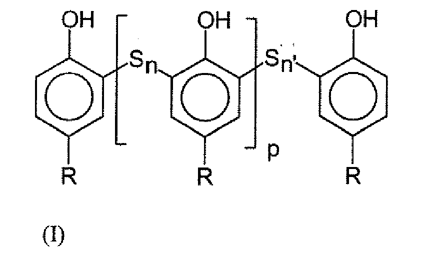 in which:
- R is an alkyl radical containing 1 to 20, preferably 4 to 10, carbon atoms;
- n and n' are two integers, which may be identical or different, from 1 to 8, preferably from 1 to 4;
- p is an integer from 0 to 50, preferably from 0 to 20; and
- 10 to 90%, preferably 30 to 50%, of a product (II) consisting of bis(triethoxysilylpropyl)tetrasulfide.

2. The elastomeric composition as claimed in claim 1, **characterized in that** one or more elastomers chosen from polybutadiene and poly(styrene/butadiene) are used.

3. The elastomeric composition as claimed in either of claims 1 and 2, **characterized in that** a white reinforcing filler is used.

4. The elastomeric composition as claimed in claim 3, **characterized in that** the white filler is silica, by itself or as a mixture with alumina.

5. The elastomeric composition as claimed in one of claims 1 to 4, **characterized in that** a mixture of compounds of formula (I) is used in which R is an alkyl radical containing at least one tertiary carbon via which R is linked to the aromatic ring.

6. The elastomeric composition as claimed in claim 5, **characterized in that** R is a *tert*-butyl or *tert*-pentyl radical.

7. The elastomeric composition as claimed in one of claims 1 to 6, **characterized in that**, as mixture of compounds of formula (I), a mixture is used in which the average value of n and of n' is about 2 and the average value of p is about 5.

8. The elastomeric composition as claimed in one of claims 1 to 7, **characterized in that** the (I)/(II) weight ratio is from 1 to 3 and preferably about 2.

9. The elastomeric composition as claimed in one of claims 3 to 8, **characterized in that** it is obtained by mixing, with 100 parts by weight of diene elastomer(s):
- 10 to 200, preferably between 20 and 150, parts by weight of white reinforcing filler; and
- 0.5 to 10, preferably 2 to 8, parts by weight of coupling agent as defined above.

10. The elastomeric composition as claimed in claim 9, **characterized in that** 50 to 100 parts by weight of silica and 5 to 7 parts by weight of the coupling agent are mixed with 100 parts by weight of diene elastomer(s).

11. The elastomeric composition as claimed in one of claims 1 to 10, **characterized in that** standard non-sulfur-containing additives are also incorporated.

12. The elastomeric composition as claimed in claim 11, **characterized in that** the diene elastomer, the reinforcing filler, the products (I) and (II) and the non-sulfur-containing additives are subjected to mechanical working, including at least one thermal step at a temperature of between 130°C and 170°C, preferably between 130°C and 150°C.

13. The elastomeric composition as claimed in either of claims 11 and 12, **characterized in that** a vulcanization system comprising in particular sulfur and vulcanization accelerators, is also added, by finish mechanical working.

14. A coupling agent as defined in one of claims 1 and 5 to 8.

15. A molded article that can be obtained by forming the composition as defined in claim 13 followed by heating.

16. The molded article as claimed in claim 15, **characterized in that** it is a tire tread.

## Patentansprüche

1. Schwefelvulkanisierbare Elastomerzusammensetzung, die mindestens ein Dienelastomer und mindestens einen Verstärkerfüllstoff umfasst, **dadurch gekennzeichnet, dass** sie durch ein Verfahren erhältlich ist, welches das Mischen des Elastomers und des Füllstoffs, mit einer wirksamen Menge eines Kopplungsmittels umfasst, das aus einer Kombination von
- 10 bis 90 %, vorzugsweise von 50 bis 70 % eines Produkts (I) besteht, welches aus einem Gemisch von Poly(alkylphenol)polysulfiden der Formel: 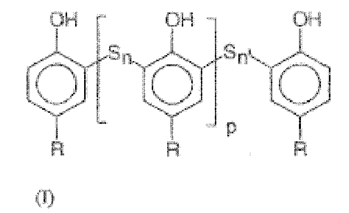 besteht, in der:
- R ein Alkylradikal darstellt, welches 1 bis 20 Kohlenstoffatome, vorzugsweise 4 bis 10 Kohlenstoffatome aufweist;
- n und n' zwei identische oder voneinander verschiedene ganze Zahlen zwischen 1 und 8, vorzugsweise zwischen 1 und 4 sind,
- p eine ganze Zahl zwischen 0 und 50, vorzugsweise zwischen 0 und 20 ist sowie
- 10 bis 90 %, vorzugsweise von 30 bis 50 % eines Produkts (II), das aus Bis-Triethoxysilylpropyltetrasulfat besteht.

2. Elastomerzusammensetzung nach Anspruch 1, **dadurch gekennzeichnet, dass** ein oder mehrere Elastomere verwendet werden, die ausgewählt sind aus Polybutadien oder Poly(styrolbutadien).

3. Elastomerzusammensetzung nach einem der Ansprüche 1 oder 2, **dadurch gekennzeichnet, dass** ein weißer Verstärkerfüllstoff verwendet wird.

4. Elastomerzusammensetzung nach Anspruch 3, **dadurch gekennzeichnet, dass** der weiße Füllstoff aus Kieselsäure, allein oder im Gemisch mit Tonerde besteht.

5. Elastomerzusammensetzung nach einem der Ansprüche 1 bis 4, **dadurch gekennzeichnet, dass** ein Gemisch von Verbindungen der Formel (I) verwendet wird, in dem R ein Alkylradikal darstellt, das mindestens einen tertiären Kohlenstoff aufweist, durch welchen R an den aromatischen Kern gebunden ist.

6. Elastomerzusammensetzung nach Anspruch 5, **dadurch gekennzeichnet, dass** R ein Tertiobutyl- oder Tertiopentylradikal darstellt.

7. Elastomerzusammensetzung nach einem der Ansprüche 1 bis 6, **dadurch gekennzeichnet, dass** als Gemisch von Verbindungen der Formel (I) ein Gemisch verwendet wird, bei dem der Mittelwert von n und n' ungefähr 2 beträgt und der Mittelwert von p ungefähr 5 beträgt.

8. Elastomerzusammensetzung nach einem der Ansprüche 1 bis 7, **dadurch gekennzeichnet, dass** das Gewichtsverhältnis (I)/(II) zwischen 1 und 3, vorzugsweise nahe 2 liegt.

9. Elastomerzusammensetzung nach einem der Ansprüche 3 bis 8, **dadurch gekennzeichnet, dass** zu 100 Gewichtsanteilen Dienelastomer(en):
- 10 bis 200, vorzugsweise zwischen 20 und 150 Gewichtsanteile weißer Verstärkerfüllstoff und
- 0,5 bis 10, vorzugsweise 2 bis 8 Gewichtsanteile zuvor definiertes Kopplungsmittel gemischt werden.

10. Elastomerzusammensetzung nach Anspruch 9, **dadurch gekennzeichnet, dass** zu 100 Gewichtsanteilen Dienelastomer(en) 50 bis 100 Gewichtsanteile Kieselsäure und 5 bis 7 Gewichtsanteile des Kopplungsmittels gemischt werden.

11. Elastomerzusammensetzung nach einem der Ansprüche 1 bis 10, **dadurch gekennzeichnet, dass** ferner gebräuchliche, nicht-schwefelhaltige Zusatzstoffe aufgenommen werden.

12. Elastomerzusammensetzung nach Anspruch 11, **dadurch gekennzeichnet, dass** das Dienelastomer, der Verstärkerfüllstoff, die Produkte (I) und (II) und die nicht-schwefelhaltigen Zusatzstoffe einer mechanischen Behandlung unterworfen werden, die mindestens einen thermischen Schritt umfasst, wobei die Temperatur zwischen 130 °C und 170 °C, vorzugsweise zwischen 130 °C und 150 °C liegt.

13. Elastomerzusammensetzung nach einem der Ansprüche 11 oder 12, **dadurch gekennzeichnet, dass** ferner ein Vulkanisiersystem zugegeben wird, das insbesondere Schwefel und Vulkanisierbeschleuniger umfasst, durch mechanische Oberflächenbehandlung.

14. Kopplungsmittel wie in einem der Ansprüche 1 und 5 bis 8 definiert.

15. Gegossener Gegenstand, der durch Formen der in Anspruch 13 definierten Zusammensetzung und nachfolgendes Erhitzen erhältlich ist.

16. Gegossener Gegenstand nach Anspruch 15, **dadurch gekennzeichnet, dass** es sich um Reifenlaufflächen handelt.
